(19) Europäisches Patentamt
European Patent Office
Office européen des brevets

(11) **EP 3 249 799 B1**

(12) **EUROPEAN PATENT SPECIFICATION**

(45) Date of publication and mention
of the grant of the patent:
**01.09.2021 Bulletin 2021/35**

(21) Application number: **16740052.2**

(22) Date of filing: **14.01.2016**

(51) Int Cl.:
*H02M 7/48* (2007.01)    *H02M 1/12* (2006.01)
*H02M 7/483* (2007.01)

(86) International application number:
**PCT/JP2016/050976**

(87) International publication number:
**WO 2016/117445 (28.07.2016 Gazette 2016/30)**

(54) **POWER CONVERSION DEVICE**

STROMWANDLUNGSVORRICHTUNG

DISPOSITIF DE CONVERSION DE COURANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.01.2015 JP 2015009781**

(43) Date of publication of application:
**29.11.2017 Bulletin 2017/48**

(73) Proprietor: **Kabushiki Kaisha Toshiba
Minato-ku
Tokyo 105-8001 (JP)**

(72) Inventors:
• **NAKAZAWA, Yosuke**
  **Tokyo 105-8001 (JP)**
• **ARAI, Takuro**
  **Tokyo 105-8001 (JP)**
• **HASEGAWA, Ryuta**
  **Tokyo 105-8001 (JP)**
• **TAMADA, Shunsuke**
  **Tokyo 105-8001 (JP)**
• **SEKIGUCHI, Kei**
  **Tokyo 105-8001 (JP)**
• **SUZUKI, Daichi**
  **Tokyo 105-8001 (JP)**

(74) Representative: **AWA Sweden AB
Junkersgatan 1
582 35 Linköping (SE)**

(56) References cited:
**EP-A2- 2 760 123        WO-A1-2013/108376
JP-A- 2001 210 533        JP-A- 2001 210 533
JP-A- 2013 099 054        JP-A- 2013 115 837
US-A1- 2014 369 096**

**Description**

<u>FIELD</u>

Embodiments of the present disclosure relate to a power conversion device that mutually converts power between AC and DC.

<u>BACKGROUND</u>

In recent years, the needs for large-scale DC power transmission like an undersea cable has been increasing, and the needs for power conversion devices has also been increasing. An example power conversion device is a three-phase and two-level converter applied in the case of a converter that converts AC from a power system into DC, or a three-phase and two-level inverter applied in the case of an inverter which converts DC into AC and which drives a motor.

As for such three-phase and two-level power conversion devices, the elements necessary for mutually converting power between three-phase AC and DC are accomplished by six semiconductor switching elements that is a minimum number. Hence, in the case of the three-phase and two-level power conversion device, downsizing and cost reduction are accomplishable. Hence, three-phase and two-level power conversion devices have great expectations, and a further improved performance is desired.

An example general control method for a three-phase and two-level power conversion device is a PWM control that controls the magnitude of the output voltage by controlling a pulse width. More specifically, in the case of a three-phase and two-level inverter, when an input DC voltage is defined as Vdc, two values that are +Vdc/2 and -Vdc/2 are changed at a predetermined timing for each phase by pulse width control (PWM). Hence, the output waveform by the three-phase and two-level inverter can be a simulated AC waveform.

In general, according to conventional power conversion devices, a filter that absorbs harmonic components is inserted in the three-phase AC output. This is because there is a need for reducing harmonic components contained in a strain wave produced by switching in the case of power system connected device like DC power transmission. In the case of, in particular, a high-voltage motor drive that utilizes a high-voltage switching frequency, since the PWM switching frequency cannot be increased to a high frequency, the filter for harmonic absorption is essential.

Such a filter includes, in general, a reactor and a capacitor that suppresses harmonic components, and there is a responsibility to decrease the harmonic components flowing out to a power system to a level that does not give an adverse effect to other devices. Hence, the reactor and the capacitor for harmonic suppression have a large capacity, are expensive and heavy in weight. Accordingly, the insertion of the filter that absorbs the harmonic components results in a disadvantage such as the cost increase of the power conversion device and the weight increase thereof.

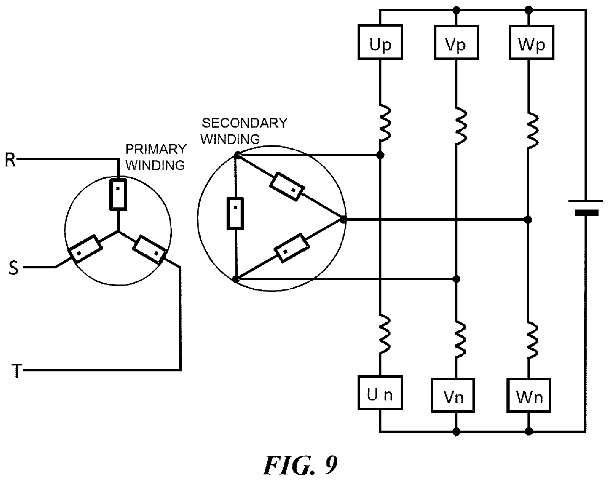

Hence, Non-Patent Document 1 discloses a circuit scheme that is a technology capable of eliminating the necessity of the above filter. For example, according to the circuit structure illustrated in FIG. 9, a power conversion device can be directly connected to a power system and a power distribution system voltage without a voltage drop by a transformer typically applied in conventional technologies. In FIG. 9, reference signs Up, Vp, and Wp indicate positive-side unit arms, while reference signs un, Vn, and Wn indicate negative-side unit arms, and the unit arm includes a unit module like a chopper-bridge unit converter.

According to the power conversion device including the transformer illustrated in FIG. 9, the multi-level output voltage and the current waveform become close to a sinusoidal waveform, and thus the filter that absorbs the harmonic components becomes unnecessary, resulting in advantages, such as cost reduction and weight saving. In addition, accomplishment of the circuit structure illustrated in FIG. 9 facilitates a simplification of the structure of the transformer. Since the transformer is heavy and bulky, and has relatively large costs in the entire system, advancement of the simplification accomplishes an achievement of a power conversion device that is inexpensive and compact.

According to the power conversion device illustrated in FIG. 9, a DC capacitor connected in parallel with the switching element is provided as a voltage source that changes the presence and absence of voltage output in accordance with switching. Since this DC capacitor is to control the voltage value always to be constant, it is necessary in principle to always cause a backflow current to flow back to a DC power supply, and thus a short-circuit route for charging and discharging is provided in each phase.

In the case of three-phase power conversion devices, however, since the three phases are connected to the common DC power supply, when the DC voltage synthesis value in each phase even slightly differs, an excessive short-circuit current flows between those phases, possibly giving an adverse effect to other devices. In addition, even if the average value of the DC voltage synthesis value is consistent in each phase, when the ON and OFF timing and the cycle differ, an excessive short-circuit current also flows.

Hence, in order to address the excessive short-circuit current flowing between the phases, a large-size reactor like a buffer reactor may be inserted in each phase to restrict the short-circuit current. However, reactors like the buffer reactor is large-size and expensive.

That is, according to the conventional technology illustrated in FIG. 9, although the filter that absorbs the harmonic components becomes unnecessary, an insertion of a large-size reactor like the buffer reactor is necessary. Hence, the dimension of the power conversion device increases, and the costs thereof increase. Consequently, the advantage that is the unnecessity of the filter is canceled by the disadvantage of the insertion of the buffer reactor, making it difficult to achieve an inexpensive and compact power conversion device.

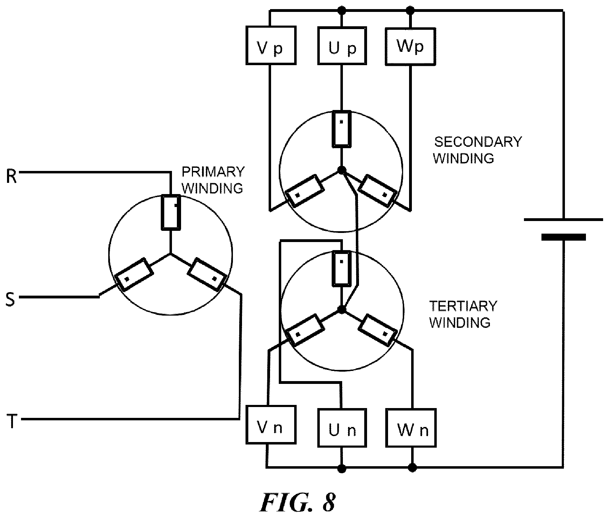

Hence, a scheme of eliminating a reactor that addresses an excessive short-circuit current is proposed which is a power conversion device as illustrated in FIG. 8. According to the power conversion device that employs a circuit structure illustrated in FIG. 8, a transformer that has a secondary winding and a tertiary winding formed by a star wiring, and the neutral point of the secondary winding and that of the tertiary winding are connected to each other. According to the power conversion device that includes such a transformer, an occurrence of an excessive short-circuit can be suppressed without inserting the buffer reactor. Hence, it becomes possible to output voltage and current waveforms that are low harmonic waves without a filter for harmonic absorption while eliminating a large-size and expensive reactor, achieving the cost reduction of the device and the downsizing thereof.

Publication US 2014/369096 discloses a power conversion apparatus comprising a three-phase transformer having first and second secondary winding groups.

### CITATION LIST

### PATENT LITERATURES

Patent Document 1: JP 2013-115837 A

### NON-PATENT LITERATURES

Non-Patent Document 1: Collection of Preceding Papers, 2009, Paper 401 (Multilevel Voltage-Sourced Converters for HVDC and FACTS Applications: Siemens AG)

### SUMMARY

The present invention relates to a power conversion device comprising a three-phase and three-winding transformer according to claim 1. A preferred embodiment of the invention is defined in the dependent claim.

Meanwhile, according to the power converter devices, a harmonic current like a third-order harmonic current is to be accidentally output. The harmonic current becomes an excitation current for the transformer built in the power conversion device, and strains the system voltage that is a sinusoidal voltage. Hence, in the power conversion devices, a suppression of an output of the harmonic current is greatly desired in addition to the elimination of the filter that absorbs the harmonic components and of the large-size reactor.

Embodiments of the present disclosure have been proposed in order to address the above technical problems, and an objective is to provide a power conversion device which includes a transformer having a secondary winding and a tertiary winding each in a delta connection to suppress an occurrence of a harmonic current that is to be accidentally output, thereby suppressing an occurrence of a voltage strain in a power system, and which accomplishes a high reliability.

In order to address the foregoing technical problems, a power conversion device according to an embodiment includes the following features.

(1) A three-phase and three-winding transformer that has a secondary winding and a tertiary winding subjected to a delta wiring.

(2) A neutral point of the secondary winding of the three-phase and three-winding transformer in each phase is connected to a neutral point of the tertiary winding in the same phase.

(3) The power conversion device further includes a unit module that has a leg and a capacitor connected in parallel with each other, the leg including two self-extinguishing switching elements connected in series, the positive-side and negative-side unit arms each including the multiple unit modules connected in series.

(4) The positive-side unit arm has one end connected to a positive side of a DC power supply, and another end connected to an output terminal of the secondary winding of the three-phase and three-winding transformer in each phase.

(5) The negative-side unit arm has one end connected to a negative side of the DC power supply, and another end connected to an output terminal of the tertiary winding of the three-phase and three-winding transformer in each phase.

BRIEF DESCRIPTION OF DRAWINGS

FIG. 1 is a circuit structural diagram according to a first embodiment;
FIG. 2 is a circuit structural diagram illustrating a unit module according to the first embodiment;
FIG. 3 is a circuit structural diagram illustrating a winding structure of a transformer according to the first embodiment;
FIG. 4 is a circuit structural diagram illustrating a connection relationship among the transformer, a unit arm, and a DC power supply according to the first embodiment;
FIG. 5 is a circuit structural diagram generally illustrating a phase according to the first embodiment;
FIG. 6 (A) is a voltage waveform diagram of a positive-side unit module, FIG. 6(B) is a voltage waveform diagram of a negative-side unit module, FIG. 6 (C) is a voltage waveform of a secondary winding of the transformer, FIG. 6 (D) is a voltage waveform diagram of a tertiary winding of the transformer, and FIG. 6(E) is an output voltage waveform diagram of the transformer;
FIG. 7 is a circuit structural diagram illustrating a winding structure of a transformer according to another embodiment;
FIG. 8 is a circuit structural diagram illustrating a conventional power conversion device; and
FIG. 9 is a circuit structural diagram illustrating a conventional power conversion device.

DETAILED DESCRIPTION

[1] First Embodiment

[Structure]

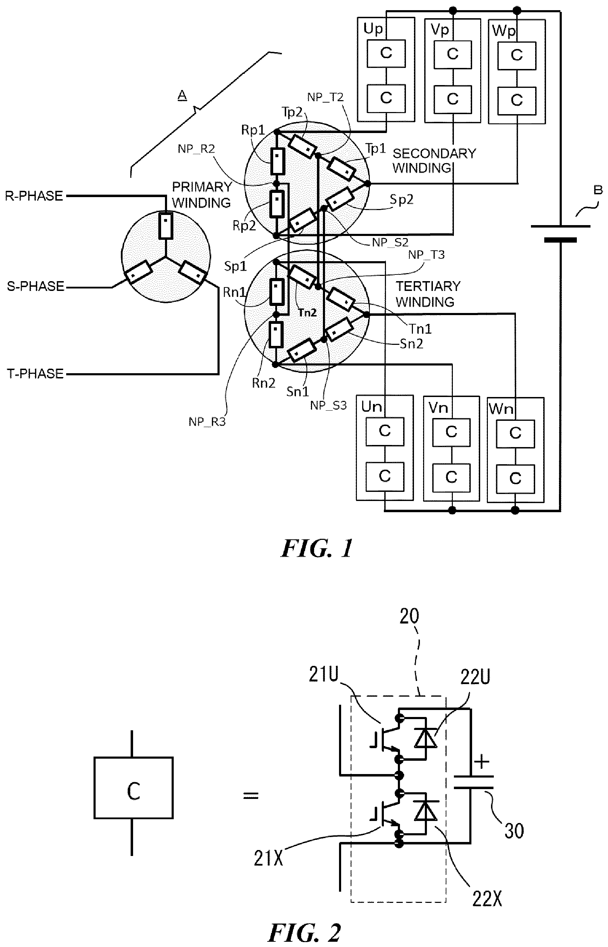

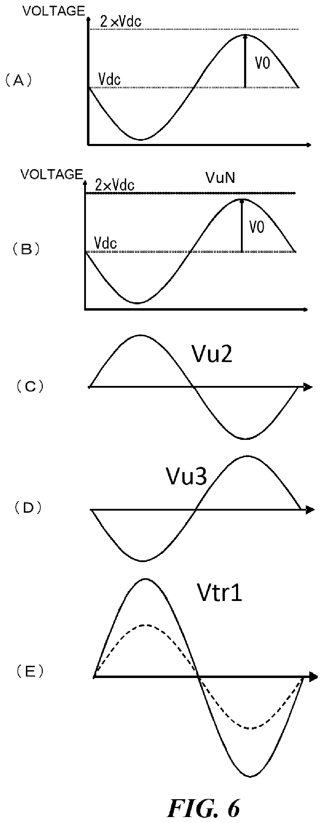

A structure according to a first embodiment will be described with reference to FIGS. 1 to 6. FIGS. 1 to 5 are each a circuit structural diagram according to the first embodiment, and FIGS. 6 (A) to 6 (E) are each a voltage waveform diagram according to the first embodiment. According to the first embodiment, a power conversion device converts power from a three-phase and 50-Hz power supply into DC power via a three-phase and three-winding transformer A which is connected between a three-phase AC system and a DC system, and which is an insulation transformer.

As illustrated in FIG. 1, according to the first embodiment, the three-phase and three-winding transformer A, a DC power supply B, positive-side unit arms Up, Vp, and Wp connecting two unit modules C in series, and also negative-side unit arms Un, Vn, and Wn. In the example case illustrated in FIG. 1, the two unit modules C are provided, but the number of installed unit modules may be any number that is equal to or greater than one.

(Unit Arm)

First, the unit arm will be described. As illustrated in FIG. 1, the six unit arms are provided according to the first embodiment. The three positive-side unit arms Up, Vp, and Wp, and the three negative-side unit arms Un, Vn, and Wn are provided. As for the positive-side unit arms Up, Vp, and Wp, the one end is connected to the positive side of the DC power supply B, and the other end is connected to the output terminal in each phase of the secondary winding of the three-phase and three-winding transformer A. As for the negative-side unit arms Un, Vn, and Wn, the one end is connected to the negative side of the DC power supply B, and the other end is connected to the output terminal in each phase of the tertiary winding of the three-phase and three-winding transformer A.

(Unit Module)

The unit module C that forms the unit arm Up, Vp, Wp, Un, Vn, and Wn will be described with reference to the circuit diagram that is FIG. 2. The unit module C is a chopper bridge unit converter, and as illustrated in FIG. 2, a leg 20 (indicated by dotted lines) and a capacitor 30 are connected in parallel with each other. Switching elements 21U, 21X that have a self-extinguishing performance are connected in series with the leg 20. As for those switching elements 21U, 21X, an IGBT that has a rating of substantially 6500 V is applied, and reflux diodes 22U, 22X are connected to the respective switching elements in a reverse-parallel manner.

(Three-Phase and Three-Winding Transformer)

As illustrated in FIG. 1, the three-phase and three-winding transformer A has a primary winding subjected to a star wiring, and is connected to the three phases of the 50-Hz power supply, i.e., an R-phase, an S-phase, and a T-phase. In addition, the three-phase and three-winding transformer A has a secondary winding and a tertiary winding subjected to a delta wiring.

The three-phase and three-winding transformer A has a transformer core divided for each phase of the primary winding, and the core of the secondary winding is separated from the core of the tertiary winding. In addition, the winding ratio between the primary winding and the secondary winding is 1:1. The three-phase and three-winding transformer A is dividedly provided for each phase at the positive side and the negative side. A side to which a black dot is given in each winding is the positive side.

In the three-phase and three-winding transformer A, the neutral point in each phase between the secondary winding and the tertiary winding is connected with each other in the same phase. That is, an R-phase neutral point NP_R2 of the secondary winding is connected to an R-phase neutral point NP_R3 of the tertiary winding, an S-phase neutral point NP_S2 of the secondary winding is connected to an S-phase neutral point NP_S3 of the tertiary winding, and a T-phase neutral point NP_T2 of the secondary winding is connected to a T-phase neutral point NP_T3 of the tertiary winding.

(Connection Relationship of Each Component)

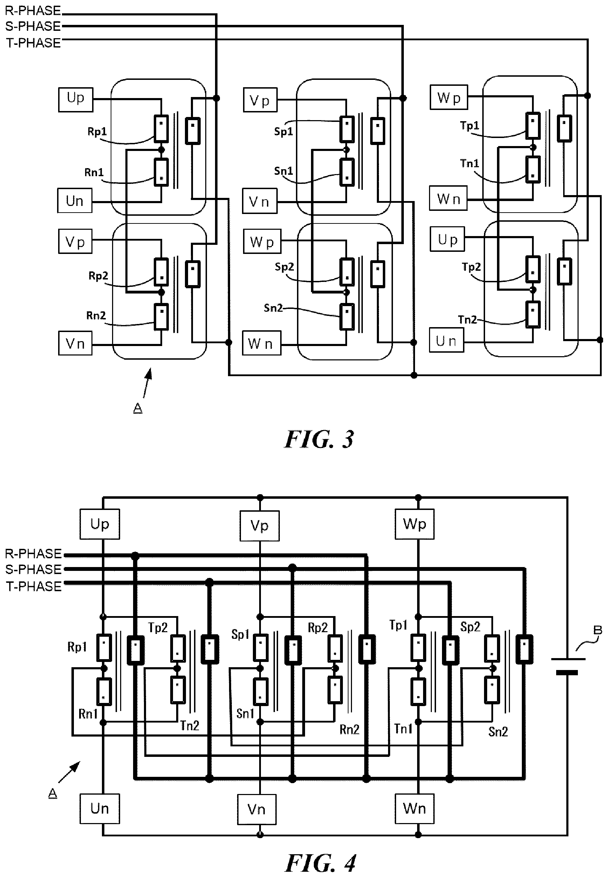

In FIG. 3, the delta wiring structure of the three-phase and three-winding transformer A is divided to illustrate the winding structure. Since the secondary winding and the tertiary winding are each subjected to the delta wiring, each unit arm is connected to the two windings of the three-phase and three-winding transformer A. That is, the positive-side unit arms Up, Vp, and Wp are connected to the secondary-winding side, and more specifically, the unit arm Up is connected to a winding Rp1 and a winding Tp2, the unit arm Vp is connected to a winding Sp1, and a winding Rp2, and the unit arm Wp is connected to a winding Tpl, and a winding Sp2.

In addition, the negative-side unit arms Un, Vn, and Wn are connected to the tertiary-winding side, and more specifically, the unit arm Un is connected to a winding Rn1 and a winding Tn2, the unit arm Vn is connected to a winding Sn1 and a winding Rn2, and the unit arm Wn is connected to a winding Tn1 and a winding Sn2.

In FIG. 4, connection relationships among the three-phase and three-winding transformer A, the unit arms Up, Vp, Wp, Un, Vn, and Wn, and the DC power supply B. The one end of the unit arm Up, Vp, and Wp in each phase at the positive side is connected to the positive side of the DC power supply B. In addition, the one end of the unit arm Wp, Un, and Vn in each phase at the negative side is connected to the negative side of the DC power supply B.

[Action]

(Harmonic Suppression)

It is known that the switching by the semiconductor elements produces strain waves, and the harmonic components contained in this strain wave gives an adverse effect to other devices. As described previously, in order to address such harmonic components, a filter that absorbs the produced harmonic components has been inserted.

The filter for harmonic absorption may be formed by a reactor and a capacitor that suppress harmonic components, but it is necessary to decrease the harmonic components flowed out to the power system to a level that does not give an adverse effect to other devices. Hence, a large-capacity filter is necessary, resulting in a disadvantage like an increase in size.

Hence, according to the first embodiment, the unit modules C are connected in series and in a multi-stage, thereby forming a multi-level power conversion device. This causes the output waveform according to the first embodiment to become further close to a sinusoidal wave. Hence, the harmonic components can be surely suppressed to a level that does not give an adverse effect to other devices without providing a filter that absorbs the harmonic components.

In addition, according to the first embodiment, in the three-phase and three-winding transformer A, the secondary winding and the tertiary winding each employ the delta wiring structure. In addition, the neutral point of the secondary winding in each phase is connected to that of the tertiary winding in the same phase. This suppresses, in principle, an occurrence of a harmonic current that is to be accidentally output. Accordingly, a possibility is eliminated such that the harmonic current becomes an excitation current for the three-phase and three-winding transformer A, and strains the system voltage.

(AC Voltage Output Action)

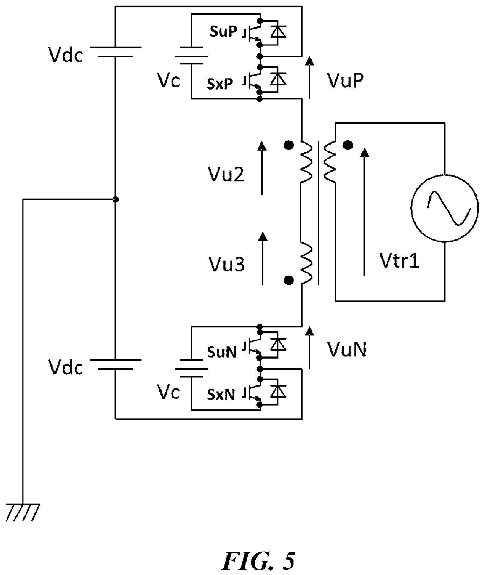

An AC waveform output action according to this embodiment will be described with reference to FIGS. 5 and 6. FIG. 5 illustrates a case in which the unit arm is formed by the two unit modules C. A voltage at an AC output point as viewed from a ground point is defined as Vu, while regarding the neutral point of the DC power supply B as the ground point.

Vu indicates three-phase AC voltages Vu, Vv, and Vw when R, S, and T phase voltages of the 50-Hz AC power supply are subjected to a delta-star conversion, and this delta-star conversion is a well-known technology in general AC logics, and thus the description thereof will be omitted in this specification. The positive and negative voltages of the DC power supply B are defined as Vdc, the capacitor voltage of the unit module C is defined as Vc, the output voltage by the unit module C connected to the positive power supply side is defined as VuP, and the output voltage by the unit module C connected to the negative power supply side is defined as VuN. In addition, an AC voltage instruction that is calculated at an upper hierarchy system and desired to be output is defined as VuRef.

$$\text{(Formula 1)}$$

$$\text{Positive-side unit module VuP} = \text{Vdc} - \text{VuRef}$$

The voltage waveform of this VuP is illustrated in FIG. 6 (A). In addition, the waveform of a voltage Vu2 of the secondary winding in the three-phase and three-level transformer A is illustrated in FIG. 6(C).

At this time, the output voltage Vu is to be output as follow.

$$\text{(Formula 2)}$$

$$\text{Vu} = \text{Vdc} - \text{VuP} = \text{Vdc} - (\text{Vdc} - \text{VuRef}) = \text{VuRef}$$

$$\text{(Formula 3)}$$

$$\text{Negative-side unit module VuN} = \text{Vdc} - \text{VuRef}$$

The voltage waveform of this VuN is illustrated in FIG. 6(B). In addition, the waveform of a voltage Vu3 of the tertiary winding in the three-phase and three-winding transformer A is illustrated in FIG. 6(D).

At this time, the output voltage Vu is to be output as follow.

$$\text{(Formula 4)}$$

$$\text{Vu} = -\text{Vdc} + \text{VuN} = -\text{Vdc} + (\text{Vdc} - \text{VuRef}) = -\text{VuRef}$$

In the three-phase and three-level transformer A, since the secondary winding has a negative polarity and the tertiary winding has a positive polarity, a voltage Vtr1 as illustrated in FIG. 6(e) is to be output.

(DC Charging and Discharging Actions)

An AC load current Iu flows in both the positive-side unit module C and the negative-side unit module B. At this time, the capacitor 30 of the positive-side unit module C is charged and discharged by power PowerP represented by the following formula.

$$\text{(Formula 5)}$$

$$\text{PowerP} = \text{VuP} \times \text{Iu} = (\text{Vdc} - \text{VuRef}) \times \text{Iu}$$

When the output voltage VuRef and the AC load current Iu are in the same phase, i.e., when the power factor is 1 in operation, the average value of PowerP in an AC cycle becomes a negative value. That is, when an output voltage control is performed in the above action mode only, the constant average value of the capacitor voltage as for the positive-side unit module C cannot be maintained, disabling a continuous operation. Likewise, as for the capacitor voltage of the negative-side unit module C, PowerN when the power factor is 1 in operation has an average value that becomes a positive value in an AC cycle, and the constant average value of the capacitor voltage as for the negative-side unit module C cannot be maintained, disabling the continuous operation.

In order to address this technical disadvantage, according to the first embodiment, a DC charging and discharging current is flown through a route from the positive side of the DC power supply B to the negative side thereof via the positive-side unit module C, the three-phase and three-winding transformer A, and the negative-side unit module C. This enables the capacitor to have a constant average value for the voltage.

More specifically, a constant control correction value ΔVfcControl for the DC capacitor voltage average value is calculated from the following formula, and voltage instructions VuP, VuN for the positive and negative side unit modules C are output for correction.

$$\text{(Formula 6)}$$
$$\Delta VfcControl = G(s) \times (VCref - VCu\_AVE)$$

where:

VCref is a unit module capacitor voltage instruction value, and is a preset value;
VCu_AVE is a capacitor voltage average value for the positive and negative unit modules entirely in the U-phase; and
G(s) is a control gain, and s is an Laplace operator. A proportional integration control is applied.
Such an action is similar to that of the conventional technologies, but according to the conventional technologies, a large-size reactor like a buffer reactor to suppress a keen increase of a DC circulating current is necessary in particular.

(Leakage Inductance Utilization)

In contrast, according to the circuit scheme of the first embodiment, the three-phase and three-winding transformer A that is an insulation transformer is built in the route for the DC circulating current. Hence, a keen increase of the DC circulating current by the leakage inductance components from this transformer A does not occur in principle. Normally, transformers always have leakage magnetic fluxes in practice by magnetic leakage. Such magnetic fluxes do not contribute to a transformer action, but act as the leakage inductance from the primary winding and from the secondary winding.

That is, according to the first embodiment, when the DC circulating current flows, since the three-phase and three-winding transformer A that is an insulation transformer is involved as the route for the DC circulating current, the leakage inductance component of the three-phase and three-winding transformer A can function as a reactor. This suppresses a keen increase of the DC circulating current, and eliminates the need for a large-size and expensive reactor like a buffer reactor.

[Effects]

As described above, according to the first embodiment, voltage and current waveforms that are low-harmonic are output without a filter for harmonic absorption. In addition, a keen increase of the DC circulating current is suppressed and the average value of the capacitor voltage as for the unit module C is controlled to be constant without an installation of a large-size expensive reactor like a buffer reactor. Hence, the filter for harmonic absorption and the large-size and expensive reactor can be eliminated, resulting in an achievement of an inexpensive and compact power conversion device.

In addition, according to the first embodiment, the secondary winding of the three-phase and three-winding transformer A and the tertiary winding thereof employ the delta wiring structure, and the neutral point of the secondary winding in each phase is connected to that of the tertiary winding in the same phase. Hence, an occurrence of a harmonic current that is to be accidentally output is suppressed. Consequently, the harmonic current does not become an excitation current for the three-phase and three-winding transformer A, and the system voltage can be maintained as a sinusoidal voltage, thereby suppressing a strain voltage. Accordingly, the power conversion device which is not only inexpensive and compact but also has a high reliability is achieved.

[2] Other Embodiments

The present disclosure is not limited to the above embodiments.

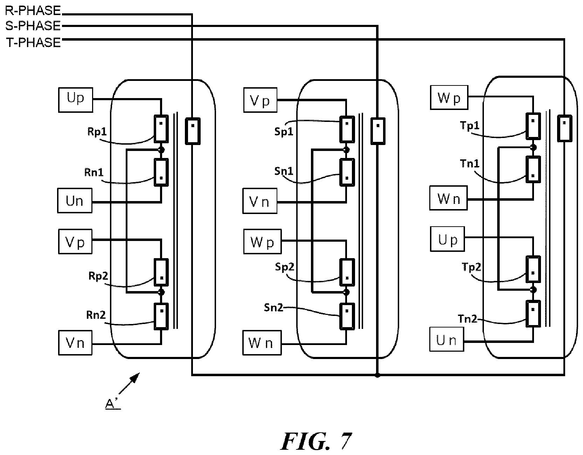

(1) For example, as illustrated in FIG. 7, a three-phase and three-winding transformer A' may employ a structure in which the transformer core is divided for each phase of the primary winding, and the secondary winding and the tertiary winding are wound around the same core. According to such an embodiment, since the core for the secondary winding and for the tertiary winding is shared in each phase, DC components are canceled, and DC magnetic fluxes produced by the capacitor DC charging and discharging current are canceled against each other. Hence, a core magnetic saturation is suppressed, a saturated magnetic flux density is reduced, and thus the transformer core can be further downsized.

(2) A single primary winding, a single secondary winding, and a single tertiary winding may be wound around the respective leg portions of three-phase three-leg transformer A. According to this structure, like the above embodiment, the DC magnetic fluxes are canceled against each other in each phase. In addition, a downsizing like a normal three-phase transformer is also accomplishable by a three-phase and three-leg core structure.

(3) According to the above embodiment, a conversion from DC to AC and a conversion from AC to DC are enabled by the similar structure. That is, the power conversion device according to the above embodiment may be an inverter or a converter.

(4) Several embodiments of the present disclosure have been described, but those embodiments are merely presented as examples, and are not intended to limit the scope of the present disclosure. Those embodiments can be carried out in other various forms, and various omissions, replacements, and modifications can be made thereto without departing from the scope of the present disclosure. Those embodiments and modified forms thereof are within the scope of the present disclosure, and are also within the scope of the invention as recited in the appended claims and the equivalent range thereto.

REFERENCE SIGNS LIST

| | |
|---|---|
| A, A' | Three-phase and three-winding transformer |
| B DC | power supply |
| C | Unit module |
| Up, Vp, Wp | Positive-side unit arm |
| Un, Vn, and Wn | Negative-side unit arm |
| 20 | Leg |
| 21U, 21X | Switching element |
| 22U, 22X | Reflux diode |
| 30 | Capacitor |

**Claims**

1. A power conversion device comprising a three-phase and three-winding transformer (A) that comprises a secondary winding and a tertiary winding, whereby the secondary winding and the tertiary winding each employ a delta wiring structure, **characterized in that** the power conversion device further comprises a point (NP_R2, NP_S2, NP_T2) between two windings in each phase of the secondary winding of the three-phase and three-winding transformer is connected to a respective point (NP_R3, NP_S3, NP_T3) between two windings in a same phase of the tertiary winding;

   a unit module (C) comprising a leg (20) and a capacitor (30) connected in parallel with each other, the leg (20) comprising two self-extinguishing switching elements (21U, 21X) connected in series; and

   positive-side and negative-side unit arms (Up, Vp, Wp, Un, Vn, Wn) each comprising a multiple number of the unit module (C) connected in series, the positive-side unit arm (Up, Vp, Wp) comprises one end connected to a positive side of a DC power supply (B), and three other ends each connected to a respective output terminal in each phase of the secondary winding of the three-phase and three-winding transformer (A); and the negative-side unit arm (Un, Vn, Wn) comprises one end connected to a negative side of the DC power supply (B), and three other ends each connected to a respective output terminal in each phase of the tertiary winding of the three-phase and three-winding transformer (A).

2. The power conversion device according to claim 1, wherein a transformer core of the three-phase and three-winding transformer (A') is divided for each phase of a primary winding, and the secondary winding and the tertiary winding are wound around a common core.

**Patentansprüche**

1. Stromumwandlungsvorrichtung, die einen Dreiphasen- und Dreiwicklungstransformator (A) umfasst, der eine Sekundärwicklung und eine Tertiärwicklung umfasst, wobei die Sekundärwicklung und die Tertiärwicklung jeweils eine Dreieckverdrahtungsstruktur einsetzen,

   **dadurch gekennzeichnet, dass** die Stromumwandlungsvorrichtung ferner umfasst:

   einen Punkt (NP_R2, NP_S2, NP_T2) zwischen zwei Wicklungen in jeder Phase der Sekundärwicklung des Dreiphasen- und Dreiwicklungstransformators, der mit einem entsprechenden Punkt (NP_R3, NP_S3, NP_T3) zwischen zwei Wicklungen in einer gleichen Phase der Tertiärwicklung verbunden ist;

ein Einheitsmodul (C), das einen Zweig (20) und einen Kondensator (30) umfasst, die miteinander parallelgeschaltet sind, wobei der Zweig (20) zwei selbstlöschende Schaltelemente (21U, 21X) umfasst, die in Reihe geschaltet sind; und

Einheitsarme (Up, Vp, Wp, Un, Vn, Wn) auf der positiven Seite und der negativen Seite, die jeweils eine Vielzahl von dem Einheitsmodul (C) umfassen, die in Reihe geschaltet sind,

wobei der Einheitsarm (Up, Vp, Wp) auf der positiven Seite ein Ende, das mit einer positiven Seite einer Gleichstromleistungsversorgung (B) verbunden ist, und drei andere Enden umfasst, die jeweils mit einem entsprechenden Ausgangsanschluss in jeder Phase der Sekundärwicklung des Dreiphasen- und Dreiwicklungstransformators (A) verbunden sind; und

der Einheitsarm (Un, Vn, Wn) auf der negativen Seite ein Ende, das mit einer negativen Seite der Gleichstromleistungsversorgung (B) verbunden ist, und drei andere Enden umfasst, die jeweils mit einem entsprechenden Ausgangsanschluss in jeder Phase der Tertiärwicklung des Dreiphasen- und Dreiwicklungstransformators (A) verbunden sind.

2. Stromumwandlungsvorrichtung nach Anspruch 1, wobei ein Transformatorkern des Dreiphasen- und Dreiwicklungstransformators (A') für jede Phase einer Primärwicklung geteilt ist und die Sekundärwicklung und die Tertiärwicklung um einen gemeinsamen Kern gewickelt sind.

## Revendications

1. Dispositif de conversion d'énergie comprenant un transformateur triphasé à trois enroulements (A) qui comprend un enroulement secondaire et un enroulement tertiaire, de telle manière que l'enroulement secondaire et l'enroulement tertiaire emploient chacun une structure de câblage en triangle,
   **caractérisé en ce que** le dispositif de conversion d'énergie comprend en outre :

   un point (NP_R2, NP_S2, NP_T2) entre deux enroulements dans chaque phase de l'enroulement secondaire du transformateur triphasé à trois enroulements est relié à un point respectif (NP_R3, NP_S3, NP_T3) entre deux enroulements dans une même phase de l'enroulement tertiaire ;

   un module d'unité (C) comprenant une branche (20) et un condensateur (30) reliés en parallèle l'un à l'autre, la branche (20) comprenant deux éléments de commutation auto-extinguibles (21U, 21X) reliés en série ; et

   des bras d'unité de côté positif et de côté négatif (Up, Vp, Wp, Un, Vn, Wn) comprenant chacun un nombre multiple du module d'unité (C) reliés en série,

   le bras d'unité de côté positif (Up, Vp, Wp) comprend une extrémité reliée à un côté positif d'une alimentation en énergie CC (B), et trois autres extrémités, chacune d'elles étant reliée à une borne de sortie respective dans chaque phase de l'enroulement secondaire du transformateur triphasé à trois enroulements (A) ; et

   le bras d'unité de côté négatif (Un, Vn, Wn) comprend une extrémité reliée à un côté négatif de l'alimentation en énergie CC (B), et trois autres extrémités, chacune d'elles étant reliée à une borne de sortie respective dans chaque phase de l'enroulement tertiaire du transformateur triphasé à trois enroulements (A).

2. Dispositif de conversion d'énergie selon la revendication 1, dans lequel un noyau de transformateur du transformateur triphasé à trois enroulements (A') est divisé pour chaque phase d'un enroulement primaire, et l'enroulement secondaire et l'enroulement tertiaire sont enroulés autour d'un noyau commun.

**FIG. 1**

**FIG. 2**

**FIG. 3**

**FIG. 4**

**FIG. 5**

**FIG. 6**

R-PHASE
S-PHASE
T-PHASE

Up
Rp1
Rn1
Un
Vp
Rp2
Rn2
Vn

Vp
Sp1
Sn1
Vn
Wp
Sp2
Sn2
Wn

Wp
Tp1
Tn1
Wn
Up
Tp2
Tn2
Un

A'

*FIG. 7*

**FIG. 8**

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014369096 A

- JP 2013115837 A

**Non-patent literature cited in the description**

- Multilevel Voltage-Sourced Converters for HVDC and FACTS Applications: Siemens AG. *Collection of Preceding Papers,* 2009